# EUROPEAN PATENT SPECIFICATION

(11) **EP 1 594 782 B1**
(45) Date of publication and mention of the grant of the patent: **22.10.2008**
(21) Application number: 04708090.8
(22) Date of filing: 04.02.2004
(51) Int. Cl.: B65G 63/00, B65G 63/02

(54) **TRANSSHIPMENT SYSTEM FOR CONTAINERS**
UMSCHLAGSYSTEM FÜR CONTAINER
SYSTEME DE TRANSBORDEMENT POUR CONTENEURS

(30) Priority: 14.02.2003 NL 1022696
(43) Date of publication of application: 16.11.2005
(73) Proprietor: Rotterdam Short Sea Terminals B.V., 3089 KM Rotterdam (NL)
(72) Inventor: VAN ZUNDERT, Jan, Wijnandus, NL-3191 RE Hoogvliet (NL); BOER, Abraham, NL-3331 KV Zwijndrecht (NL)
(74) Representative: van Westenbrugge, Andries
(86) International application number: PCT/NL2004/000025
(87) International publication number: WO 2004/071911

(56) References cited:
- WO-A-98/58861
- GB-A- 2 065 076
- US-A- 4 106 639

## Description

The present invention relates to a transhipment system according the preamble of claim 1. In order to bridge a large distance between the point at which the vessel ties up and the loading/unloading point for vehicles such as lorries or track vehicles, two linked cranes one behind the other are used in the state of the art. The first crane redisplaces/places the containers from/in the vehicle, whilst the second crane is responsible for loading/unloading the vehicles. Displacement means operate between them. Displacement means consisting of a vehicle on wheels that displaces over the road surface of the quay and picks up the container by driving over it and lifting the container are known. Such vehicles are also termed straddle or shuttle carriers. Other automated systems have been proposed which operate with automated guided vehicles with a guidance system installed in the road surface. One container can be transported per AGV.

Vehicles tied to rails have the disadvantage that if one of the vehicles breaks down for whatever reason the system is no longer effective because the vehicle that has broken down constitutes an obstacle to the passage of the other vehicles. This problem is avoided with constructions that can displace independently over the road surface. However, such constructions are particularly expensive and there must be complex radiographic controllers together with safety features in order, on the one hand, to select the right paths and, on the other hand, to prevent accidents.

All these systems have the disadvantage that separate displacement means are required for each container.

Because containers can never be passed on one to one, there is a need for buffer capacity beneath both the first and the second crane without this leading to additional handling of containers.

WO 98/58861 discloses a system with a number of cranes between which, that is to say transversely to the direction of displacement of the ship's crane, vehicles can be displaced back and forth. To this end the containers are placed on individual supports and vehicles can be positioned beneath these supports and the supports raised with the aid of lifting means. This is a construction that is not very efficient and is particularly expensive to implement.

US 4 106 639 A discloses a transhipment system according to the preamble of claim 1, wherein a vehicle running on wheels is disclosed that operates between the two cranes described above and on which containers can be placed. However, the vehicle is connected to the ship's crane by a rigid coupling.

The aim of the present invention is to avoid the disadvantages described above associated with the state of the art and to provide an improved transhipment system.

This aim is achieved with a transhipment system having the features of claim 1.

According to the present invention, the displacement means are movable back and forth along a fixed path. As a result, a relatively simple construction that is reliable in operation can suffice. Moreover, these displacement means have a platform on which the containers are placed. That is to say, the displacement means are not provided with lifting means or the like, as is known in the state of the art. Moreover, the displacement means according to the present invention are designed to take at least four containers that are stacked in the most efficient manner. Consequently, the platform also has a buffer function. The first crane, or ship's crane, used here is a crane that, with the aid of wheels, travels over rails that are installed close to the ground. That is to say, this is not an overhead crane, such as is proposed in the state of the art.

Although in theory it is possible to displace at least four containers, in practice larger numbers will be displaced. The dimensions of such containers can, in principle, be any size and preferably a maximum of forty TEU (twenty foot equivalent unit) is used. According to an advantageous embodiment of the present invention, multiple containers in a three by three stack are employed. According to a further variant it is possible to displace up to eighteen containers by coupling two platforms together. It will be understood that in principle any number of containers can be placed on a platform. As a result of the buffer function, the capacity problem during transhipment of containers is further limited. In general, the first and second cranes will be elongated, that is to say will displace the containers in a direction that is essentially perpendicular to the quay wall. These cranes can be driven in a direction parallel to the quay wall. According to the present invention the displacement means can also be displaced in a direction perpendicular to the quay wall. According to an advantageous embodiment, a large number of displacement means are arranged in the direction of travel of the first and second cranes, that is to say over the length of the quay. Preferably, these displacement means or platforms can all be displaced between the first and second crane independently of one another. Depending on the layout of the site, displacement of the platforms both parallel and perpendicular to the quay wall is possible. The path over which the displacement means can be displaced can be limited. After all, all that has to be provided is linking between the first and second crane and temporary storage. By way of example, a distance of less than 100 m, more particularly a distance of less than 50 m and more particularly a distance of approximately 30 m is mentioned.

Because the containers can be stacked on the platforms in a particularly compact manner, it is possible to provide the first crane with a space at the end away from the quay wall where it is possible to transfer containers directly from/to vehicles. That is to say that, for example, in a final stage of loading of a vessel urgent freight is brought directly from the vehicles onto the ship via the first crane.

The invention also relates to a method for the transhipment of containers from/to a vessel to/from a vehicle, according to claim 7.

The invention will be explained in more detail below with reference to an illustrative embodiment shown in the drawing. In the drawing:
Fig. 1 shows, diagrammatically, a side view of the make-up of a transhipment system according to the present invention;
Fig. 2 shows a plan view of the transhipment system according to Fig. 1; and
Fig. 3 shows, diagrammatically, a perspective view of the displacement means according to the invention.

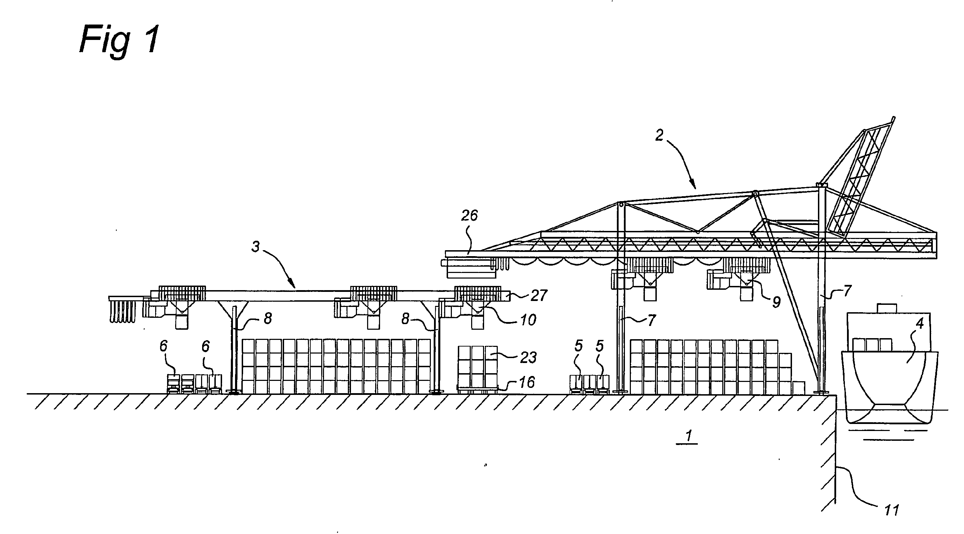

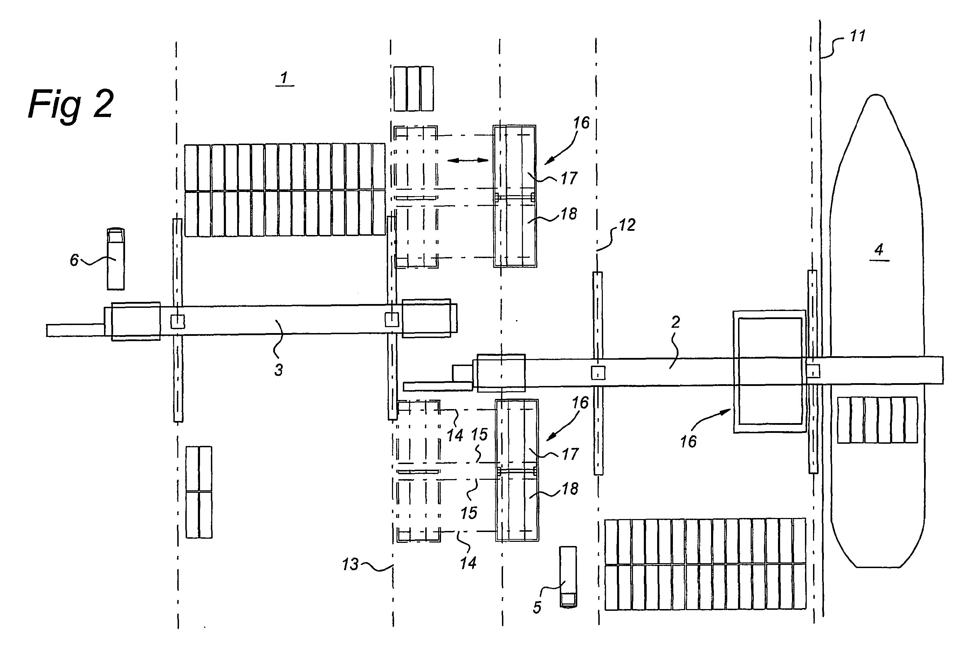

In Figs. 1 and 2 the quay is indicated by 1. The quay wall has reference numeral 11. A first crane 2 and a second crane 3 are installed on the quay 1. The first crane 2 is designed to displace containers from and to a vessel 4. The second crane 3 is designed to transfer containers from and to lorries 6. It can be understood that railway wagons can be used instead of lorries. The first crane 2 is supported on legs 7, whilst the second crane 3 is supported on legs 8. Wheels are fitted at the bottom of the legs concerned, so that the first crane 2 can be displaced along rails 12 parallel to the quay wall 11 and the second crane 3 can be displaced along rails 13, likewise parallel to the quay wall. In this way a large area can be covered by the two cranes. Lorries can optionally be loaded/unloaded directly with the aid of the first crane and these lorries are indicated by 5. The first crane 2 is provided with a displaceable lifting unit 9, whilst the displaceable lifting unit of the second crane 3 is indicated by 10.

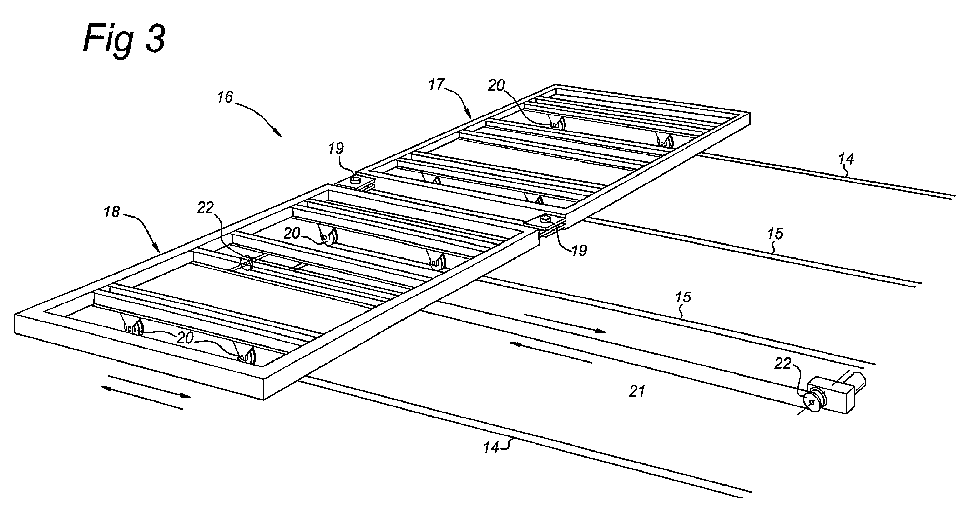

A number of platforms 16 are installed between the end of the first crane 2 that is indicated by 26 and the end of the second crane 3 that is indicated by 27. Each platform 16 consists of platform sections 17, 18 coupled to one another (see Fig. 3). The coupling is effected with simple pins 19. Each platform section can be displaced along rails. These rails are indicated by 14, 15. Displacement is effected with a winch cable (Fig. 3) and winch or winch drum 22. Each platform section is provided with wheels 20 that run over the rails. This is a particularly simple construction with which the displacement of a platform can be operated by the crane driver who is closest to the platform. On operation, the platform is simply displaced from the one terminal position below, for example, the first crane 2 to the other terminal position below, for example, the second crane 3 and vice versa. That is to say, no particular technical measures are necessary in order to provide a safe system.

As can be seen from the figures, each platform section is designed to take nine containers 23 of any type up to a maximum of 45 ft. That is to say, a single platform can hold eighteen such containers. An appreciable buffer capacity is obtained as a result. As can be seen from Fig. 2, a number of displacement means or platforms 16 are installed extending over the length of the quay. By this means appreciable intermediate storage for containers is provided. After all, when unloading, a large number of platforms can be filled with the first crane, whilst the platforms concerned can be emptied as desired with the second crane 3. By way of example of the displacement of platform 16, a distance of 20 - 40 and more particularly approximately 30 metres may be mentioned. Because, moreover, the system with platforms is particularly reliable in operation, malfunctions are not to be expected. Should a problem nevertheless arise, this will have hardly any consequences as a result of the breakdown of a single platform 16 because the other platforms can displace back and forth unimpeded and continue to perform their task. Because the platform can be uncoupled into platform sections 17, 18, in the case of maintenance or repair each platform section can easily be lifted up and displaced by the first crane 2 or second crane 3.

The system with rails described above can be implemented particularly easily. After all, only rails or other tracks with associated displacement constructions such as a winch have to be installed. Depending on the substrate, so-called sleepers or a concrete formwork can suffice as foundation for the rails.

Although the invention has been described above with reference to a preferred embodiment, it must be understood that numerous modifications can be made thereto without going beyond the scope of the present application. For those skilled in the art, variants which fall within the scope of the appended claims will be immediately apparent on reading the above.

## Claims

1. Transhipment system for transhipment of containers (23) on a quay, comprising a first crane (2) for loading and unloading containers into and from a vessel (4), wherein said first crane (2) can be displaced along a track (12) parallel to the quay wall (11), a second crane (3) for loading and unloading containers, wherein said second crane (3) can be displaced along a track (13) parallel to the quay wall (11) and unmanned displacement means (16, 22) for said containers, which are independent of said first and second crane (2; 3) are installed between said first and second crane (2; 3) and comprise a platform (17, 18) movable back and forth along a fixed track (14, 15), embodied to take at least four containers, wherein said platform (17, 18) is provided with wheels (20) permanently joined thereto and with a support surface for said containers;
**characterized in that** said second crane (3) loads and unloads containers onto or from a vehicle (5), **in that** said platform (17, 18) is embodied to take at least two containers positioned alongside one another and two containers on top of it and **in that** said fixed track (14, 15) is arranged perpendicular to said tracks (12; 13) of said first and second crane (2; 3).

2. System according to Claim 1, wherein said first and second cranes are elongated cranes and are movable in a direction perpendicular to the longitudinal extension thereof, wherein the track for said cranes is formed by the boundary of the quay, wherein a number of displacement means are arranged alongside one another for displacement parallel to longitudinal extension of said cranes.

3. System according to Claim 1, wherein said displacement means can be displaced exclusively parallel to the longitudinal extension of said cranes.

4. System according to one of the preceding claims, wherein the drive for said displacement means comprises a winch installed in a fixed position, a cable of which winch engaging on said displacement means.

5. System according to one of the preceding claims, wherein a loading/unloading space both onto/from vehicles and onto/from said platform is arranged below the end (26) of said first crane (2) facing away from the quay wall.

6. System according to one of the preceding claims, wherein said platform is provided with coupling means for coupling a further platform thereto.

7. Method for the transhipment on a quay of containers from/to a vessel to/from a vehicle, with a transhipment system according to one of the previous claims, comprising the unloading/loading of a container from a vessel with said first crane to/from said displacement means, transferring said container from/to said displacement means to/from said second crane and transferring it from/to said second crane to/from a vehicle, wherein at least four containers are arranged on said displacement means before said displacement means are displaced, and wherein the displacement means are displaced independently of said cranes, are in direct contact with said containers and are in direct contact with said quay.

## Patentansprüche

1. Umschlagsystem zum Umladen von Containern (23) auf einen Kai, umfassend einen ersten Kran (2) zum Be- und Entladen von Containern in ein und aus einem Schiff (4), wobei der erste Kran (2) entlang einer Fahrspur (12) parallel zur Kaimauer (11) verschoben werden kann, einen zweiten Kran (3) zum Be- und Entladen von Containern, wobei der zweite Kran (3) entlang einer Fahrspur (13) parallel zur Kaimauer (11) verschoben werden kann, und unbemannte Verschiebungsmittel (16, 22) für die Container, welche unabhängig von dem ersten und zweiten Kran (2; 3) zwischen dem ersten und zweiten Kran (2; 3) angeordnet sind und eine entlang einer festen Fahrspur (14, 15) vor- und zurückbewegbare Plattform (17, 18) umfassen, die zum Tragen von mindestens vier Containern ausgebildet ist, wobei die Plattform (17, 18) mit dauerhaft damit verbundenen Rädern (20) und einer Tragfläche für die Container versehen ist;
**dadurch gekennzeichnet, dass** der zweite Kran (3) Container auf ein oder von einem Fahrzeug (5) auf- bzw. ablädt, die Plattform (17, 18) ausgebildet ist, um mindestens zwei Container längs nebeneinander und zwei Container auf deren Oberseite zu tragen, und die feste Farhspur (14, 15) senkrecht zu den Fahrspuren (12; 13) des ersten und zweiten Krans (2; 3) angeordnet ist.

2. System nach Anspruch 1, wobei der erste und zweite Kran Längskräne sind und in einer senkrecht zu ihrer Längsausdehnung verlaufenden Richtung bewegbar sind, wobei die Fahrspur für die Kräne durch die Begrenzung des Kais gebildet ist, wobei eine Anzahl von Verschiebungsmitteln längs nebeneinander zum Verschieben parallel zur Längsausdehnung der Kräne angeordnet sind.

3. System nach Anspruch 1, wobei die Verschiebungsmittel ausschließlich parallel zur Längsausdehnung der Kräne verschiebbar sind.

4. System nach einem der voranstehenden Ansprüche, wobei der Antrieb für die Verschiebungsmittel eine in einer festen Position angeordnete Winde umfasst, wobei ein Kabel der Winde an dem Verschiebungsmittel angreift.

5. System nach einem der voranstehenden Ansprüche, wobei ein Raum zum Be-/Entladen sowohl auf/von Fahrzeugen als auch auf die/von der Plattform hinter dem von der Kaimauer abgewandten Ende (26) des ersten Krans (2) angeordnet ist.

6. System nach einem der voranstehenden Ansprüche, wobei die Plattform mit Kupplungsmitteln zum daran Ankuppeln einer weiteren Plattform versehen ist.

7. Verfahren zum Umladen von Containern aus einem/auf ein Schiff auf ein/von einem Fahrzeug, mit einem Umschlagsystem nach einem der voranstehenden Ansprüche, umfassend das Ent-/Beladen eines Containers von einem Schiff mit dem ersten Kran zu/von den Verschiebungsmitteln, Übertragen des Containers von/zu den Verschiebungsmitteln zu/von dem zweiten Kran und Übertragen des Containers von/zu dem zweiten Kran zu/von einem Fahrzeug, wobei vor dem Verschieben der Verschiebungsmittel mindestens vier Container auf dem Verschiebungsmittel angeordnet werden, und wobei die Verschiebungsmittel unabhängig von den Kränen verschoben werden und in direktem Kontakt mit den Containern und in direktem Kontakt mit dem Kai stehen.

## Revendications

1. Système de transbordement pour le transbordement de conteneurs (23) sur un quai, comprenant une première grue (2) pour charger et décharger les conteneurs dans et depuis un navire (4), où ladite première grue (2) peut être déplacée le long d'une voie (12) parallèle au mur du quai (11), une deuxième grue (3) pour charger et décharger les conteneurs, où ladite deuxième grue (3) peut être déplacée le long d'une voie (13) parallèle au mur (11) du quai, et des moyens de déplacement sans équipage (16,22) pour lesdits conteneurs, qui sont indépendants desdites première et deuxième grues (2;3), sont installés entre lesdites première et deuxième grues (2;3) et comprennent une plate-forme (17,18) déplaçable vers l'arrière et vers l'avant le long d'un chemin fixe (14,15), réalisée pour prendre au moins quatre conteneurs, où ladite plate-forme (17,18) présente des roues (20) reliées de manière permanente à celle-ci et une surface de support pour lesdits conteneurs;
**caractérisé en ce que** ladite deuxième grue (3) charge et décharge des conteneurs sur ou d'un véhicule (5), **en ce que** ladite plate-forme (17,18) est réalisée pour prendre au moins deux conteneurs positionnés l'un à côté de l'autre et deux conteneurs au-dessus, et **en ce que** ledit chemin fixe (14,15) est agencé perpendiculairement auxdites voies (12;13) desdites première et deuxième grues (2;3).

2. Système selon la revendication 1, où lesdites première et deuxième grues sont des grues oblongues et sont déplaçables dans une direction perpendiculaire à son extension longitudinale, où la voie pour lesdites grues est formée par la limite du quai, où un nombre de moyens de déplacement sont agencés les uns à côté des autres pour le déplacement parallèlement à l'extension longitudinale desdites grues.

3. Système selon la revendication 1, où lesdits moyens de déplacement peuvent être déplacés exclusivement parallèlement à l'extension longitudinale desdites grues.

4. Système selon l'une des revendications précédentes, où l'entraînement pour lesdits moyens de déplacement comprend un winch installé dans une position fixe, un câble dudit winch venant en prise avec lesdits moyens de déplacement.

5. Système selon l'une des revendications précédentes, où un espace de chargement/déchargement à la fois sur/de véhicules et sur/de ladite plate-forme est agencé en dessous de l'extrémité (26) de ladite première grue (2) orientée au loin du mur du quai.

6. Système selon l'une des revendications précédentes, où ladite plate-forme présente des moyens de couplage pour le couplage d'une autre plate-forme à celle-ci.

7. Procédé pour le transbordement sur un quai de conteneurs de/à un navire à/d'un véhicule, avec un système de transbordement selon l'une des revendications précédentes, comprenant le déchargement/chargement d'un conteneur d'un navire avec ladite première grue aux/des moyens de déchargement précités, le transfert dudit contenant des/aux moyens de déplacement précités à/de ladite deuxième grue et le transfert de celui-ci de/à ladite deuxième grue au/d'un véhicule, où au moins quatre conteneurs sont agencés sur lesdits moyens de déplacement avant que lesdits moyens de déplacement ne soient déplacés, et où les moyens de déplacement sont déplacés indépendamment desdites grues, sont en contact direct avec lesdits conteneurs et sont en contact direct avec ledit quai.
